(19) Europäisches Patentamt

European Patent Office

Office européen des brevets

(11) EP 0 862 053 A2

(12) **EUROPÄISCHE PATENTANMELDUNG**

(43) Veröffentlichungstag:
02.09.1998 Patentblatt 1998/36

(51) Int. Cl.⁶: **G01N 3/06**, G01B 11/16

(21) Anmeldenummer: 98103523.1

(22) Anmeldetag: 27.02.1998

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: 27.02.1997 DE 19707968

(71) Anmelder:
• **Renz, Rainer, Prof. Dr.**
**67663 Kaiserslautern (DE)**
• **Reese, Olaf**
**67705 Trippstadt (DE)**

(72) Erfinder:
• **Renz, Rainer, Prof. Dr.**
**67663 Kaiserslautern (DE)**
• **Reese, Olaf**
**67705 Trippstadt (DE)**

(74) Vertreter: **Lange, Thomas, Dr.**
**Patentanwälte,**
**Dr. Graf Lambsdorff und Dr. Lange,**
**Zentnerstrasse 17**
**80798 München (DE)**

(54) **Verfahren und Vorrichtung zur Untersuchung der mechanisch-dynamischen Eigenschaften eines Werkstücks**

(57) Beschrieben ist ein Verfahren zur Untersuchung der mechanisch-dynamischen Eigenschaften eines Werkstücks, wobei das Werkstück entlang einer ersten Richtung einer zyklischen Zug- und/oder Druckbeanspruchung ausgesetzt wird. Mittels einer Krafterfassungseinrichtung wird ein die Zug- und/oder Druckbeanspruchung des Werkstuckes repräsentierendes Kraftsignal erzeugt und mittels einer Wegstrecken-Erfassungseinrichtung wird ein eine Längenänderung zumindest eines vorgegebenen Abschnitts des Werkstücks repräsentierendes Wegstreckensignal erzeugt. Das Kraftsignal und das Wegstreckensignal werden einer Auswerteeinrichtung zugeführt, die aus dem während eines Beanspruchungszyklus erhaltenen Kraftsignal und Wegstreckensignal eine für die mechanisch-dynamischen Eigenschaften des vorgegebenen Abschnitts charakteristische Größe bestimmt. Das Verfahren kennzeichnet sich dadurch, daß das entlang einer zweiten Richtung mit einem Raster aus kontrastierenden Codierstreifen versehene Werkstück im Rahmen der Wegstreckenerfassung laufend entlang der zweiten Richtung unter einer vorgegebenen Abtastfrequenz von einem Laserstrahl überstrichen wird und die Intensität des von den Codierstreifen modulierten Laserlichts erfaßt wird. Der zeitliche Verlauf des Wegstreckensignals entspricht der erfaßten Intensität des modulierten Laserlichts und die Auswerteeinrichtung ermittelt aus dem zeitlichen Verlauf des Wegstreckensignals die Längenänderungen unterschiedlicher, durch zwei oder mehr Codierstreifen definierte Teilabschnitte des vom Laserlicht überstrichenen Werkstückabschnitts und die für die mechanisch-dynamischen Eigenschaften charakteristische Größe dieser unterschiedlichen Teilabschnitte.

Fig.3

**Beschreibung**

Die Erfindung betrifft ein Verfahren zur Untersuchung der mechanischdynamischen Eigenschaften eines Werkstückes nach dem Oberbegriff des Patentanspruchs 1. Ferner betrifft die Erfindung eine Vorrichtung zur Untersuchung der mechanisch-dynamischen Eigenschaften eines Werkstückes nach dem Oberbegriff des Anspruchs 13.

In vielen Bereichen der Werkstoff- und Konstruktionstechnik ist es von großer Bedeutung, das Verhalten von Werkstücken unter Belastung zu untersuchen, da derartige Untersuchungen Voraussagen über die Eignung des Werkstückes für bestimmte Verwendungszwecke sowie Aussagen über das Betriebsfestigkeits- und das Ermüdungsverhalten des Werkstücks ermöglichen. Derartige Belastungsuntersuchungen werden nicht nur an Werkstücken, die aus einem homogenen Material bestehen, sondern auch an Werkstücken aus heterogenen Werkstoffen wie z. B. faserverstärkten Kunststoffen usw., durchgeführt, und ferner kann das Belastungsverhalten von Verbindungen (Klebeverbindungen, Schraubverbindungen, Schweißverbindungen usw.) in mehrkomponentigen Werkstücken untersucht werden.

Es ist bereits bekannt, zur Untersuchung des Belastungsverhaltens von Werkstücken sogenannte Spannungs-Dehnungsversuche durchzuführen. In einem Spannungs-Dehnungsversuch wird das Werkstück mit einer zunehmenden Zugspannung beaufschlagt und die sich dabei ergebende Dehnung des Werkstückes gemessen. Die Dehnungsmessung kann beispielsweise durch einen auf das Werkstück aufgeklebten Dehnungsmeßstreifen oder durch ein an das Werkstück angeklemmtes Clip-On-Extensometer, auch als Setzdehnungsaufnehmer bezeichnet, gemessen werden. Spannungs-Dehnungsversuche können zerstörungsfrei oder bis zum Bruch durchgeführt werden. Sie ermöglichen eine quasistatische Charakterisierung der Werkstückeigenschaften unter Zug, lassen jedoch keine Aussagen hinsichtlich des Schwingfestigkeitsverhaltens des Werkstückes zu.

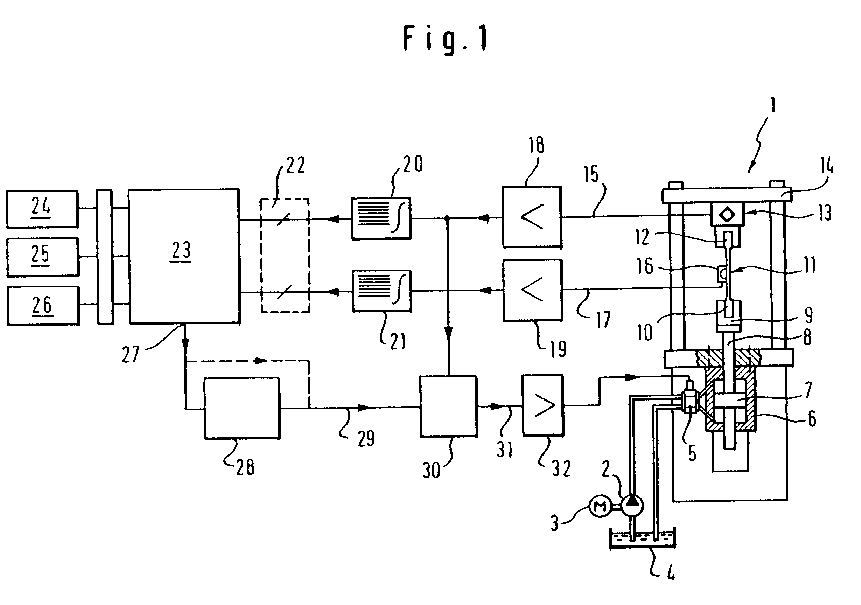

Zur Untersuchung des Schwingfestigkeitsverhaltens eines Werkstückes ist es bereits bekannt, eine sogenannte Hysteresis-Messung durchzuführen, bei der gemäß dem Oberbegriff des Anspruchs 1 eine zyklische Schwingbeanspruchung im Zug- und/oder Druckbereich an das Werkstück angelegt wird und die mechanisch-dynamischen Eigenschaften des Werkstücks und deren Veränderung während der Schwingbeanspruchung ermittelt werden (siehe Fig. 1). Durch solche Hysteresis-Messungen lassen sich insbesondere bei Polymerwerkstoffen Aussagen hinsichtlich des Dämpfungsverhaltens, des Steifigkeitsverhaltens und des nichtelastischen Deformationsverhaltens des Werkstückes und insbesondere bei metallischen Werkstoffen Aussagen hinsichtlich des plastischen Dehnungsverhaltens des Werkstückes unter Schwingbeanspruchung treffen, die bei einsinnigen Spannungs-Dehnungsversuchen nicht gewonnen werden können. Dabei ist es für die Praxis von besonderer Bedeutung, daß sich aus derart gewonnenen mechanisch-dynamischen Kennwerten eines Werkstückes praxisnahe Bewertungskriterien hinsichtlich des Ermüdungsverhaltens des Werkstückes unter realen Einsatzbedingungen aufstellen lassen sowie Aussagen über den Beginn und Verlauf von Schädigungsphänomenen im Werkstück, wie beispielsweise Mikrorißbildungen, treffen lassen.

Genauso wie einsinnige Spannungs-Dehnungsversuche können auch Hysteresis-Messungen bis zum Bruch des Werkstücks fortgeführt werden.

Zusammenfassend kann allgemein gesagt werden, daß durch Hysteresis-Messungen dynamisch beanspruchte Bauteile wesentlich besser charakterisiert und sicherer ausgelegt werden können.

Bei den bekannten Hysteresis-Messungen wird zur Dehnungsmessung entweder ein Dehnungsmeßstreifen oder ein Clip-On-Extensometer verwendet.

Bei Verwendung eines Dehnungsmeßstreifens hat es sich als nachteilig erwiesen, daß dieser nur einen relativ begrenzten Meßbereich aufweist und daher nicht für alle Untersuchungen geeignet ist.

Clip-On-Extensometer weisen einen wesentlich größeren Meßbereich (etwa 100% Relativdehnung und darüber) auf. Da die beiden Meßpunkte, zwischen denen eine Längenänderung (Dehnung) des Werkstückes gemessen wird, bei einem Clip-On-Extensometer durch Schneiden realisiert sind, die an den Prüfkörper angeklemmt werden, besteht jedoch insbesondere bei Hysteresis-Messungen die Gefahr des Verrutschens der Schneiden, was eine Verfälschung der Meßergebnisse hinsichtlich der gemessenen Abstandswerte zur Folge haben kann. Reibungseffekte zwischen Schneiden und Werkstück können ebenfalls zu falschen Aussagen, z. B. bei Polymerwerkstoffen hinsichtlich der mechanischen Dämpfung, führen. Ferner ist ungünstig, daß eine Beschädigung der Oberfläche des Werkstücks durch den mechanischen Kontakt zwischen Schneide und Werkstück auftreten kann und dabei Einflüsse auf die Ermüdungsfestigkeit nicht auszuschließen sind.

Ein grundsätzlicher Nachteil sowohl der Dehnungserfassung mittels Dehnungsmeßstreifen als auch mittels Clip-On-Extensometern besteht darin, daß diese Aufnehmer stets nur eine Integralmessung der Dehnung zwischen zwei festen Meßpunkten ermöglichen. Mit anderen Worten wird das Dehnungsverhalten außerhalb der Meßpunkte nicht ermittelt und das Dehnungsverhalten zwischen den Meßpunkten kann nur insgesamt mit der durch den Meßpunktabstand fest vorgegebenen Auflösung ermittelt werden. Da aus Platzgründen im Regelfall nur ein Clip-On-Extensometer an das Werkstück angeklemmt werden kann, ist eine Mehrortmessung an dem Werkstück zumeist nicht möglich. Ein in Abhängigkeit vom Ort unterschiedliches Dehnungsverhalten des Werkstücks ist daher auf diese Weise nicht oder nur sehr beschränkt ermittelbar.

Aus der EP 0 194 354 ist es bereits bekannt, bei einsinnigen Zugversuchen an einer Probe zur berührungsfreien Messung relativer Längenänderungen der Probe ein Lasermeßverfahren einzusetzen, bei dem ein Laserstrahl die Probe in Zugrichtung kontinuierlich abtastet, an einem auf der Probe aufgebrachten Raster reflektiert wird und der reflektierte, vom Raster intensitätsmodulierte Laserstrahl von einem Photoempfänger aufgenommen wird, wobei durch Messung der Modulationsfrequenz des reflektierten Laserstrahls auf die Dehnungsänderung der Probe geschlossen werden kann.

Aufgabe der Erfindung ist es, das eingangs beschriebene Hysteresis-Verfahren in einer Weise weiterzubilden, die die bisher bekannten Charakterisierungsmöglichkeiten eines Werkstücks unter Schwingbelastung wesentlich erweitert und dadurch Aussagen über die Schwingfestigkeit bzw. das Ermüdungsverhalten des Werkstückes sowie mögliche Schädigungsabläufe ermöglicht, die in bezug auf die Auslegung und Dimensionierung des Werkstücks von wesentlicher Bedeutung sein können und bisher in vergleichbarer Form nicht erhalten werden konnten. Es ist eine weitere Aufgabe der Erfindung, eine Vorrichtung zu schaffen, mittels der die angesprochenen weitergehenden Charakterisierungsmöglichkeiten des Werkstücks realisiert und in geeigneter Form ausgegeben werden können.

Zur Lösung dieser Aufgaben sind die Merkmale der kennzeichnenden Teile der Patentansprüche 1 und 13 vorgesehen.

Durch das erfindungsgemäße Verfahren lassen sich somit unterschiedliche Teilabschnitte des Werkstücks gleichzeitig hinsichtlich ihrer mechanisch-dynamischen Eigenschaften untersuchen, wodurch beispielsweise das Auffinden einer lokalen Materialinhomogenität des Werkstücks anhand anomalem Dämpfungs-, Steifigkeits- oder Deformationsverhalten in einem der beobachteten Teilabschnitte ermöglicht wird. Auf diese Weise kann eine bei Schwingbeanspruchung zu Tage tretende Schwachstelle des Werkstücks lokalisiert und bei unterschiedlichen Schwingbeanspruchungen charakterisiert werden. Darüber hinaus kann durch eine zeitliche Überwachung des lokalen Schwingbeanspruchungsverhaltens des Werkstücks anhand der für die unterschiedlichen Teilabschnitte gemessenen charakteristischen Größen das Entstehen von Inhomogenitäten sowie deren örtliche Ausbreitung verfolgt werden. Damit läßt sich belastungsspezifisch das zeitliche und örtliche Ermüdungsverhalten des Werkstückes charakterisieren. Beispielsweise kann ein durch eine Schweißnaht verbundenes, mehrkomponentiges Werkstück im Nahtbereich lokal auf Ver- oder Entfestigungsvorgänge (insbesondere bei Metallen) bei äußerer dynamischer Beanspruchung untersucht werden. Derartige Aussagen sind von großem Interesse, wenn es darum geht, verschiedene Werkstücke hinsichtlich ihrer Tauglichkeit für einen vorgegebenen Einsatzzweck zu testen oder wenn sich die Aufgabe stellt ein gegebenes Werkstück in gezielter Weise so zu verbessern, daß es vorgegebenen Anforderungen in bezug auf sein Stabilitätsverhalten gerecht wird.

Ein weiterer Vorzug des erfindungsgemäßen Verfahrens besteht darin, daß die zu untersuchenden Teilabschnitte des Werkstücks variabel sind, d.h. vor jeder Messung sowohl in bezug auf ihren Ort als auch ihre Länge frei definiert werden können. Dadurch wird eine einfache Anpassung des erfindungsgemäßen Verfahrens an unterschiedliche Meßerfordernisse (z. B. geforderte Ortsauflösung der Messung) und eine Reduktion der erhaltenen Meßdatenmenge ermöglicht.

Aufgrund seiner Eigenschaft als lokales Untersuchungsverfahren ist das erfindungsgemäße Verfahren besonders geeignet für die Untersuchung von mehrkomponentigen Werkstücken oder heterogenen Werkstücken mit lokal unterschiedlichem Aufbau.

Anstelle des Laserstrahls kann zum Abtasten des Rasters auch ein kollimierter Lichtstrahl einer nicht-lasernden Abtastlichtquelle vorgesehen sein.

Wenn die Richtung der zyklischen Zug- und/oder Druckbeanspruchung (erste Richtung) mit der Richtung des Rasters und der Laserabtastung (zweite Richtung) zusammenfällt, erfolgt die Messung der charakteristischen Größe(n) unmittelbar in Richtung der Krafteinleitung. Mit Richtung des Rasters wird dabei die Längserstreckungsrichtung des Rasters, d.h. die Richtung senkrecht zu den das Raster aufbauenden Codierstreifen, bezeichnet.

Da der Laserstrahl eine endliche Abtastgeschwindigkeit hat, werden die über eine Laserabtastung (Scan) erhaltenen Längenänderungswerte der überwachten Teilabschnitte zu unterschiedlichen Zeitpunkten aufgenommen. Um diesen unerwünschten Effekt auszuschalten und die Meßgenauigkeit zu erhöhen ist es bevorzugt, im Rahmen der Auswertung des Wegstreckensignals einer jeden Laserabtastung eine bestimmte absolute Referenzzeit ($t_i$) zuzuordnen und für jede Laserabtastung die Längenänderungen der unterschiedlichen Teilabschnitte bezüglich dieser zugeordneten festen Referenzzeit ($t_i$) rechnerisch zu ermitteln.

Gemäß einer zweckmäßigen Ausführungsvariante der vorliegenden Erfindung wird das gegebenenfalls zuvor impulsumgeformte Wegstreckensignal für jeden Teilabschnitt des Werkstücks in ein digitales Teilabschnitt-Längenänderungssignal umgewandelt, das die Längenänderung des entsprechenden Teilabschnitts zwischen zwei aufeinanderfolgenden Laserabtastungen repräsentiert. Diese den jeweiligen Teilabschnitten zugeordneten digitalen Teilabschnitt-Langenanderungssignale können dann einer Datenverarbeitungsanlage zugeführt werden, die mittels eines gespeicherten Rechenprogramms und unter Berücksichtigung des von einem A/D-Wandler digitalisierten Kraftsignals eine oder mehrere der charakteristischen Größen jedes Teilabschnitts des Werkstücks bestimmt.

In diesem Fall kann die bereits erwähnte Korrektur der während einer einzelnen Laserabtastung erhaltenen Teilabschnitt-Längenänderungssignale durch eine Rechenroutine der Rechenprogramms ausgeführt werden. Diese berechnet mittels eines Interpolationsverfahrens aus den bei der Abtastung erhaltenen Werten der Teilabschnitt-Längenänderungssignale die entsprechenden, für die feste Referenzzeit $t_i$ geltenden korrigierten Werte. Die charakteristischen Größen werden dann auf der Basis dieser korrigierten Werte ermittelt.

Ein Vergleich der für unterschiedliche Teilabschnitte des Werkstücks ermittelten charakteristischen Größen - beispielsweise durch Differenzbildung - ermöglicht die Betrachtung des Änderungsverhaltens der charakteristischen Größen entlang dem Verlauf des Rasters auf dem Werkstück.

Ferner kann gemäß einer bevorzugten Ausführungsvariante das zeitliche Verhalten des Dämpfungsverteilungsverlaufs und/oder des Zug- bzw. Drucksteifigkeitsverlaufs und/oder des nichtelastischen Deformationsverlaufs und/oder des plastischen Dehnungsverlaufs mittels eines in der Datenverarbeitungsanlage gespeicherten Graphikprogramms in Echtzeit verfolgt werden und die genannten Verläufe können beispielsweise durch Umsetzung in eine Falschfarben-Darstellung des Werkstücks graphisch dargestellt werden.

Obwohl die zyklische Beanspruchung grundsätzlich allein im Zug- oder allein im Druckbereich durchgeführt werden kann, ist es bevorzugt, die zyklische Beanspruchung im Zug-Druck-Wechselbereich auszuüben, da sich auf diese Weise in einem einzigen Experiment ein unterschiedliches Verhalten des Werkstücks im Zug- und Druckbereich gut feststellen und charakterisieren läßt.

Der Belastungsverlauf eines Schwingungszyklus kann in weitem Umfang variiert werden und es hat sich gezeigt, daß insbesondere sowohl sinusförmige als auch dreieckförmige oder rechteckförmige Belastungsverläufe günstige Bedingungen für die mechanisch-dynamische Untersuchung eines Werkstücks schaffen.

Nach einer besonders bevorzugten Ausführungsform des Verfahrens wird das Werkstück einer zeitlichen Abfolge von unterschiedlichen Lastniveaus ausgesetzt, die der zyklischen Zug- und/oder Druckbeanspruchung (d.h. der Zug- oder Druckschwingung) überlagert sind. Durch derartige sogenannte Laststeigungsversuche können Informationen über das spannungsabhängige Verhalten (beispielsweise bezüglich des bei Polymeren auftretenden Übergangs vom linearviskoelastischen Bereich bei niedrigem Lastniveau in den nichtlinear-viskoelastischen Bereich bei höherem Lastniveau) erhalten werden und es lassen sich Aussagen über das Einsetzen von irreversiblen Schädigungen des Werkstücks machen. Durch eine zyklische Wiederholung der Laststeigerungsversuche können darüber hinaus Hinweise auf die Schädigungsgeschwindigkeit erhalten werden und durch den Vergleich der ermittelten charakteristischen Größen bei jeder Wiederholung der Lastniveauabfolge jeweils bezüglich gleicher Lastniveaus ist es möglich, den Einfluß zwischenzeitlich auftretender niedriger oder höherer Belastungen im Hinblick auf irreversible Schädigungen zu verfolgen.

Nach einer besonders bevorzugten Auführungsvariante der Laststeigerungsversuche kann nach jeder Laststufe die Belastung auf ein Grundlastniveau mit einem niedrigen Lastwert zurückgefahren werden und der angesprochene Vergleich der charakteristischen Größe(n) bei diesem Grundlastniveau durchgeführt werden. Durch die zwischenzeitlich höhere Belastung möglicherweise hervorgerufene Schädigungen können so exakt erkannt und analysiert werden.

Nach einer weiteren vorteilhaften Ausführungsvariante der Erfindung kann das Verfahren zusätzlich zur Bestimmung der Querkontraktion des Werkstücks eingesetzt werden, indem ein von einer Lichtquelle ausgesendetes stationäres Lichtbündel mit einer Querausdehnung, die größer als die Querausdehnung des Werkstücks ist, von dem Werkstück teilweise abgeschattet wird, wobei die Intensität des nicht von dem Werkstück abgeschatteten Restlichts von einem Detektor erfaßt und in ein die Querausdehnung des Werkstücks charakterisierendes Signal umgewandelt wird. Dies ermöglicht beispielsweise die Bestimmung der Querkontraktion des Werkstücks bei variierender Zugbelastung.

Wenn die Ausdehnung des von dem Lichtbündel auf dem Werkstück erzeugten Lichtflecks in der zweiten Richtung (d.h. der Richtung des Rasters) im wesentlichen der Länge eines oder mehrerer der betrachteten Teilabschnitte des Werkstücks entspricht, ermöglicht dies eine Bestimmung der Querkontraktion des Werkstücks im Bereich eines oder mehrerer betrachteter Teilabschnitte.

Eine Verfeinerung der Querausdehnungsmessung des Werkstücks kann erreicht werden, indem das Werkstück in einer dritten Richtung mit einem weiteren Raster aus kontrastierenden Codierstreifen versehen wird und ein weiterer Laser verwendet wird, dessen weiterer Laserstrahl das weitere Raster überstreicht und dabei in ähnlicher Weise wie bei der erfindungsgemäßen Dehnungsmessung in der ersten Richtung nun das Dehnungsverhalten des Werkstücks lokal in der dritten Richtung ermittelt wird. Auf diese Weise läßt sich das Kontraktions- oder Dehnungsverhalten des Werkstücks gleichzeitig und lokal in der zweiten und der dritten Richtung (d.h. beispielsweise in Längs- und Querrichtung zur Krafteinleitungsrichtung) ermitteln und zueinander in Beziehung setzen, was dann von Interesse sein kann, wenn Rißbildungen in Faserverbundwerkstoffen mit längs-verlaufenden Fasern untersucht werden sollen.

Sowohl die integrale (ggf. auf einen Teilabschnitt beschränkte) Messung der Querausdehnung als auch die lokale Messung der Querausdehnungsverteilung des Werkstücks mittels des weiteren Rasters ermöglicht die Ermittlung der Poisson-Zahl, die das Verhältnis von Längsdehnung zu Querkontraktion angibt, in einem einzigen Experiment. Im Falle der Messung der Querausdehungsverteilung kann das weitere Raster am Werkstück an einer dem ersten Raster gegenüberliegenden Seite angebracht sein.

Durch eine gegebenenfalls lokale und/oder vorübergehende Erwärmung oder Abkühlung des Werkstücks kann das erfindungsgemäße Verfahren in vorteilhafter Weise auf die Untersuchung temperaturabhängiger Phänomene ausgedehnt werden. Für die hier betrachteten Untersuchungen der mechanischdynamischen Eigenschaften des Werkstücks ist eine kontaktfreie Erwärmung zweckmäßig.

Die dem gegenständlichen Aspekt der vorliegenden Erfindung zugrundeliegende Aufgabe wird durch die Vorrichtung gemäß Anspruch 13 gelöst.

Demnach wird die maximale Ortsauflösung der mit der Vorrichtung durchgeführten Messung durch den Mittenabstand zweier aufeinanderfolgender Codierstreifen bestimmt, wobei jedoch zu berücksichtigen ist, daß bei einer Verkleinerung des Mittenabstands zwangsläufig auch die Codierstreifendicke reduziert werden muß, wodurch die Modulationsintensität des modulierten Laserstrahls abnimmt. Dies hat zur Folge, daß in der Praxis eine untere Grenze für den Mittenabstand zweier aufeinanderfolgender Codierstreifen vorgegeben wird. Es hat sich gezeigt, daß bei einem Mittenabstand im Bereich von 0,5 bis 10 mm und insbesondere im Bereich von 2 bis 5 mm günstige Meßvoraussetzungen vorliegen.

Im Rahmen der bereits erwähnten Laststeigerungsversuche weist die Datenverarbeitungseinrichtung vorzugsweise ein Rechenprogramm auf, das bei jeder Wiederholung der Lastniveauabfolge jeweils die für gleiche Lastniveaus ermittelten charakteristischen Größen miteinander vergleicht.

Weitere vorteilhafte Ausgestaltungen des erfindungsgemäßen Verfahrens und der erfindungsgemäßen Vorrichtung sind den Unteransprüchen zu entnehmen.

Die Erfindung wird im folgenden beispielhaft anhand der Zeichnung beschrieben; in dieser zeigt:

Fig. 1      eine schematische Darstellung einer Hysteresis-Meßvorrichtung nach dem Stand der Technik;

Fig. 2a, 2b, 2c      Diagramme zur Erläuterung der Auswertung von Hystereseschleifen nach dem Stand der Technik;

Fig. 3      eine schematische Darstellung zur Erläuterung der Funktion eines gemäß der Erfindung ausgebildeten Hysteresis-Meßplatzes;

Fig. 4      eine schematische Ansicht eines bei dem erfindungsgemäßen Verfahren eingesetzten Laser-Extensometers;

Fig. 5      eine Darstellung eines Rasters aus Codierstreifen;

Fig. 6      ein Signalspannungs-Zeitdiagramm des Ausgangs des Laser-Extensometers;

Fig. 7      das Signal aus Fig. 6 nach einer Signalumformung;

Fig. 8      ein Längenänderungs-Zeitdiagramm eines Teilabschnitts des untersuchten Werkstücks während eines Belastungszyklus;

Fig. 9      ein Längenänderungs-Zeitdiagramm des Teilabschnitts aus Fig. 8 während zwei Belastungszyklen;

Fig. 10      eine Hystereseschleife des Teilabschnitts nach Fig. 9 aufgenommen während zwei Belastungszyklen;

Fig. 11a,b      zu den jeweiligen Abtastzeitpunkten erhaltene Ortskoordinatenwerte von zwei Codierstreifen $S_1$ und $S_6$ während eines Belastungszyklus;

Fig. 11c      ein Spannungs-Zeitdiagramm für den Abschnitt zwischen den Codierstreifen $S_1$ und $S_6$ während eines Belastungszyklus;

Fig. 12      ein Längenänderungs-Zeitdiagramm für die Abschnitte zwischen den Codierstreifen $S_1$ und $S_2$ bzw. $S_1$ und $S_6$ während eines Belastungszyklus ohne Korrektur der aufgetragenen Werte;

Fig. 13a,b,c      Darstellungen entsprechend den Fig. 11a,b,c;

Fig. 14      ein Längenänderungs-Zeitdiagramm des Abschnitts zwischen den Codierstreifen $S_1$ und $S_2$ während eines Belastungszyklus mit und ohne Korrektur der aufgetragenen Werte;

Fig. 15      eine Hystereseschleife des Abschnitts zwischen den Codierstreifen $S_1$ und $S_2$ während eines Belastungszyklus mit und ohne Korrektur der aufgetragenen Werte; und

Fig. 16    ein Ausführungsbeispiel einer beim erfindungsgemäßen Verfahren einsetzbaren Anordnung zur Bestimmung des Verhältnisses von Längendehnung zu Breitenkontraktion (Poisson-Zahl) des Werkstückes.

Nach Fig. 1 umfaßt eine bekannte Hysteresis-Meßvorrichtung eine servohydraulische Prüfmaschine 1 mit einem eine Hydraulikpumpe 2 antreibenden Elektromotor 3, die Hydrauliköl aus einem Reservoir 4 zu einem elektrisch steuerbaren Servoventil 5 und von dort in eine aus zwei Kammern bestehende Kolben-Zylinderanordnung 6 drückt. Der Kolben 7 ist fest mit einer Kolbenstange 8 gekoppelt, deren freies Ende 9 das eine Ende 10 des zu untersuchenden Werkstücks 11 haltert. Das andere Ende 12 des Werkstücks steht mit dem Eingang einer Kraftmeßdose 13 in Verbindung. Die Kraftmeßdose 13 ist fest am Rahmen 14 der servohydraulischen Prüfmaschine 1 verankert.

Wie ferner aus Fig. 1 ersichtlich, ist beim bekannten Hysteresis-Meßverfahren am Werkstück 11 ein Clip-On-Extensometer 16 angeklemmt, das durch eine Zweipunktmessung die Längenänderung eines fest vorgegebenen Teilabschnitts des Werkstücks 11 ermittelt und ein entsprechendes Wegsignal 17 ausgibt.

Im Rahmen der weiteren Signalverarbeitung werden das Kraftsignal 15 und das Wegsignal 17 jeweils einem Verstärker 18 bzw. 19 zugeführt, nachfolgend von A/D-Wandlern 20, 21 digitalisiert und dann - gegebenenfalls nach einer Zwischenspeicherung in einem Digitalspeicher 22 - einem Computer 23 zugeführt. An dem Computer 23 sind Peripheriegeräte (Massenspeicher 24, Drucker 25, Plotter 26) angeschlossen.

Ein Steuerausgang 27 des Computers 23 steht mit dem Eingang eines Funktionsgenerators 28 in Verbindung, der ein Sollwert-Signal 29 für einen Regler 30 liefert. Nach einem Vergleich des Sollwert-Signals 29 mit dem von der Kraftmeßdose 13 bezogenen und verstärkten Kraftsignal 15 als Istwert-Signal erzeugt der Regler 30 ein Regelsignal 31, das in einem Verstärker 32 verstärkt und anschließend dem Steuereingang des Servoventils 5 zugeführt wird.

Die Funktionsweise der bekannten Vorrichtung nach Fig. 1 ist wie folgt:

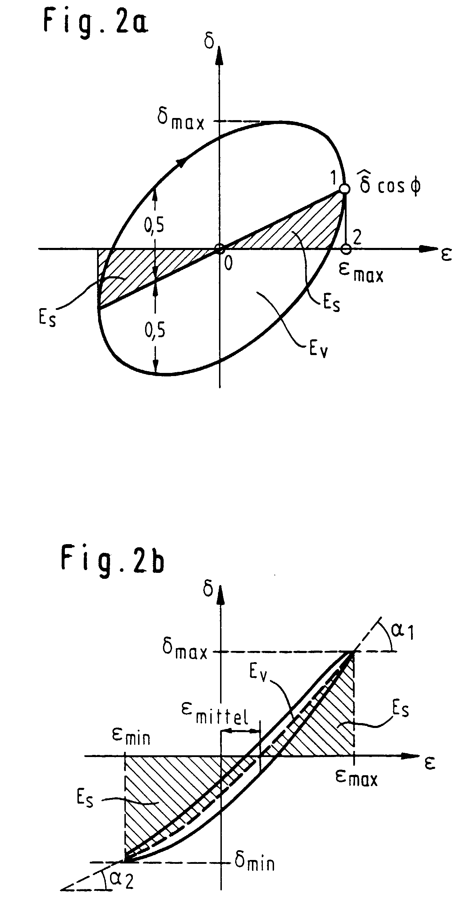

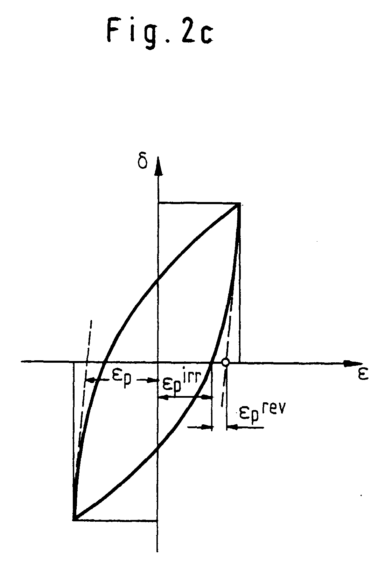

Über den Steuerausgang 27 übernimmt der Computer 23 die Aufgaben der Prozeßsteuerung, indem er mit Hilfe des Funktionsgenerators 28 und der im wesentlichen vom Regler 30, dem Servoventil 5 und der Kraftmeßdose 13 gebildeten Regelschleife die Zug- oder Druckbewegung des Kolbens 7 in kraftgeregelter Weise vorgibt. Daneben dient der Computer 23 der Meßwerterfassung und - auswertung, indem ihm die digitalisierten Kraft- und Wegsignale 15, 17 zugeführt werden und gemäß einem im Computer 23 abgespeicherten Rechenprogramm im Rahmen einer numerischen Hysteresis-Auswertung ausgewertet werden. Die bekannte Hysteresis-Auswertung wird im folgenden anhand der Fig. 2a, 2b für Polymere und anhand der Fig. 2c für Metalle dargestellt.

Zunächst wird gemäß Fig. 2a zur Erläuterung des Prinzips der Hysteresis-Auswertung von einem linear-viskoelastischen Materialverhalten ausgegangen, das in der Praxis bei Polymeren und dort nur bei kleinen Schwingungsauslenkungen auftritt. Unter der Voraussetzung einer zwangserregten sinusförmigen Spannung $\sigma(t)$ tritt eine sinusförmige Dehnung $\varepsilon(t)$ auf, die aufgrund der Werkstoffdämpfung nicht in Phase mit der Spannung ist:

$$\varepsilon(t) = \varepsilon_{max} \sin\omega t; \qquad \sigma(t) = \sigma_{max}(\omega t + \phi) \qquad (1)$$

($\omega$: Kreisfrequenz; $\phi$: Phasenverschiebung).

Die Hysteresis-Auswertungen beruhen darauf, daß durch eine geeignete geometrische Auswertung der Ellipse die Phasenverschiebung $\phi$ sowie die Speicherarbeit $E_S$ und die Verlustarbeit $E_V$ ermittelt werden. Die Speicherarbeit $E_S$ ergibt sich dabei, wie in Fig. 2a dargestellt, aus dem Inhalt der schraffierten Dreiecksfläche 012 unterhalb der Mittengerade 01 sowie der punktsymmetrisch gegenüberliegenden schraffierten Dreiecksfläche insgesamt zu:

$$E_S = \sigma_{max} \, \varepsilon_{max} \, \cos\phi \qquad (2)$$

Die Verlustarbeit ergibt sich als Flächeninhalt der gesamten Hystereseschleife zu:

$$E_V = \pi \, \sigma_{max} \, \varepsilon_{max} \, \sin\phi \qquad (3)$$

Der Quotient von Verlust- und Speicherarbeit wird als Dämpfungsgröße $\Lambda$ bezeichnet und entspricht im wesentlichen der Phasenverschiebung:

$$\Lambda = E_V/E_S = \pi \, \tan\phi \qquad (4)$$

Fig. 2b zeigt eine Hysteresekurve im Bereich nichtlinear-viskoelastischen Werkstoffverhaltens, wie es sich bei Polymeren typischerweise bei höheren dynamischen Beanspruchungen einstellt. Bei nichtlinear-viskoelastischen Verhalten besteht eine Definition des Phasenwinkels $\phi$ nicht mehr. Insofern sind hier die Gleichungen (1) bis (4) nicht mehr gültig. Die Hysteresekurve gibt jedoch auch hier signifikante Information über das nichtlineare Verformungsverhalten des Werkstücks.

Die Werkstoffdämpfung $\Lambda = E_V/E_S$ hat nun die Bedeutung einer dimensionslosen Kenngröße zur Beschreibung energieverzehrender Vorgänge einer Schwingung. Sie ist ein Maß für Werkstoffanstrengung und -zerrüttung.

Die Werkstoffsteifigkeit kann als Steigung der Mittenkurve $\tan\alpha_1$ und $\tan\alpha_2$ in den Umkehrpunkten der Mittenkurve bei $\varepsilon_{max}$ und $\varepsilon_{min}$ gewonnen werden. Die Änderung der Steifigkeit bei aufeinanderfolgenden Schwingungen ist ein Maß für die während der Ermüdungsbelastung auftretenden Schädigungen. Beispielsweise führen Rißbildungen zu einer deutlichen Steifigkeitsabnahme in der Zugphase.

Der Schnittpunkt der Mittenkurve mit der Dehnungsachse bei der Mittelspannung bestimmt die Mitteldehnung $\varepsilon_{mittel}$. Die Mitteldehnung $\varepsilon_{mittel}$ ist eine weitere wichtige Kenngröße, da sie das zyklische Kriechen eines Werkstoffes aufgrund von plastischen Deformationen wie Rißbildung oder Delamination beschreibt.

Fig. 2c zeigt eine Hystereseschleife, wie sie typischerweise bei metallischen Werkstoffen erhalten werden kann. Eine wichtige Kenngröße zur Beurteilung von in Metallen ablaufenden Verfestigungs- oder Entfestigungsvorgängen ist die plastische Dehnung $\varepsilon_p$ bzw. deren zeitlicher Verlauf unter Schwingbeanspruchung. Die plastische Dehnung $\varepsilon_p$ setzt sich aus einem irreversiblen Anteil $\varepsilon_p^{irr}$ und einem reversiblen Anteil $\varepsilon_p^{rev}$ zusammen und kann gemäß der in Fig. 2c gezeigten Darstellung aus der Hystereseschleife gewonnen werden.

Die Ermittlung der angesprochenen charakteristischen Größen erfolgt nun im Computer 23 anhand einer numerischen Auswertung der nach Fig. 2b oder 2c aus den Kraft- und Wegsignalen gewonnenen Hystereseschleife mittels eines vorgegebenen Rechenprogramms.

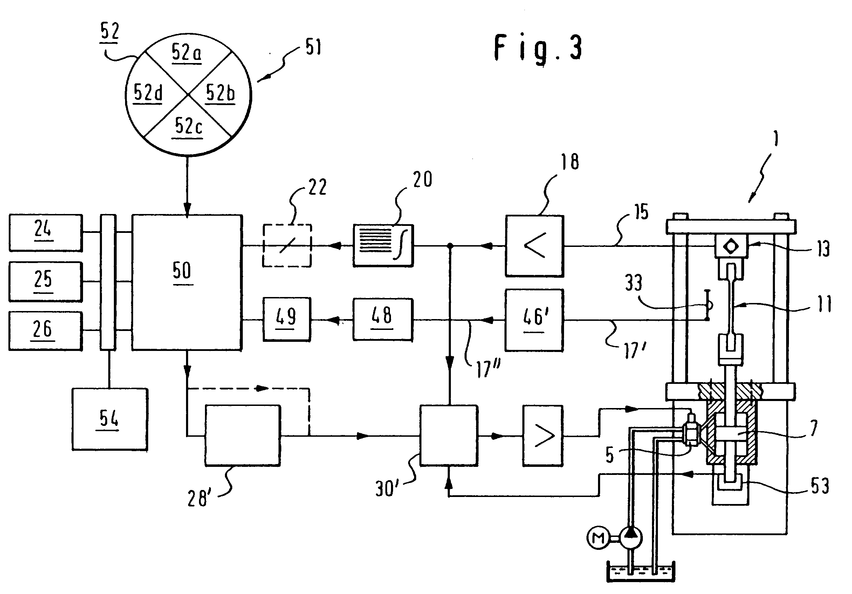

Fig. 3 dient zur Erläuterung einer Ausführungsvariante des erfindungsgemäßen Verfahrens und zeigt hierfür ein Beispiel eines Prüfstands, der zur Durchführung des erfindungsgemäßen Verfahrens ausgelegt ist. Dabei werden gleiche Teile wie in Fig. 1 mit den gleichen Bezugszeichen bezeichnet und es wird auf die entsprechende Beschreibung dieser Teile zu Fig. 1 Bezug genommen.

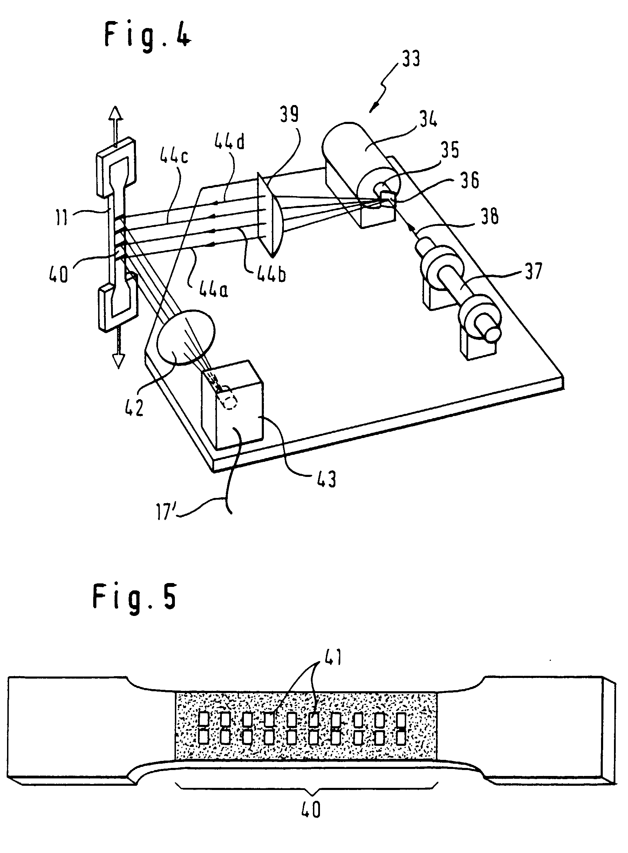

Die Vorrichtung nach Fig. 3 weist anstelle des Clip-On-Extensometers 16 aus Fig. 1 zur Wegstreckenerfassung ein Laser-Extensometer 33 auf, das nachfolgend im Zusammenhang mit den Fig. 4 und 5 näher erläutert wird.

Nach Fig. 4 treibt ein Motor 34 einen an der Motorwelle 35 stirnseitig angebrachten Drehspiegel 36 an, der beispielsweise als planarer Umlenkspiegel mit einer unter einem Winkel von 45° zur Drehachse angeordneten Spiegelfläche realisiert sein kann. Ein von einem Laser 37 erzeugter Laserstrahl 38 fällt in Axialrichtung auf den Drehspiegel 36 und wird von diesem unter einem Winkel von 90° auf eine Zylinderlinse 39 geworfen, die unter einem Abstand entsprechend ihrer Brennweite von dem Zentrum des Drehspiegels 36 entfernt angeordnet ist. Im Strahlengang hinter der Zylinderlinse 39 befindet sich das Werkstück 11, dessen Oberfläche mit einem Raster 40 aus reflektierenden Codierstreifen 41 versehen ist, wie dies in Fig. 5 näher dargestellt ist. Trifft der auf das Werkstück 11 gerichtete Laserstrahl auf einen Codierstreifen 41, so wird er an diesem in Richtung auf eine Sammellinse 42 hin umgelenkt und von dieser auf eine im Brennpunkt der Sammellinse 42 liegende Photodiode mit nachgeschalteter Verstärkeranordnung 43 fokussiert. Das Ausgangssignal der Photodiode mit Verstärkeranordnung 43 ist das Wegsignal 17', das ebenfalls in Fig. 3 dargestellt ist.

Die Arbeitsweise des Laser-Extensometers 33 ist wie folgt:

Bei durch den Motor 34 zu einer stetigen Drehbewegung angetriebenen Drehspiegel 36 überstreicht der von dem Drehspiegel 36 umgelenkte und von der Zylinderlinse 39 kollimierte Laserstrahl in ständiger Wiederholung das auf dem Werkstück 11 angebrachte Raster 40, wie dies anhand der in Fig. 4 eingezeichneten, in zeitlicher Abfolge auftretenden Strahlengänge 44a, 44b, 44c und 44d erläutert ist. Trifft der Laserstrahl 44 auf einen reflektierenden Codierstreifen 41 des Rasters 40 auf, wird er an diesem umgelenkt und als Lichtreflex von der Photodiode mit Verstärkeranordnung 43 registriert. Folglich wird bei jeder Motorumdrehung das Raster 40 einmal überstrichen und am Ausgang der Photodiode mit Verstärkeranordnung 43 ein Wegsignal 17' erzeugt, das zu jedem Zeitpunkt einer Reflexion des Laserstrahls 44 an einem Codierstreifen 41 einen Impuls aufweist.

Anstelle des Lasers 37 kann prinzipiell auch eine nicht-lasernde Abtastlichtquelle vorgesehen sein, wobei in diesem Fall für eine ausreichende Kollimation des Abtastlichtstrahls durch einen nachgeschalteten Kollimator gesorgt werden muß.

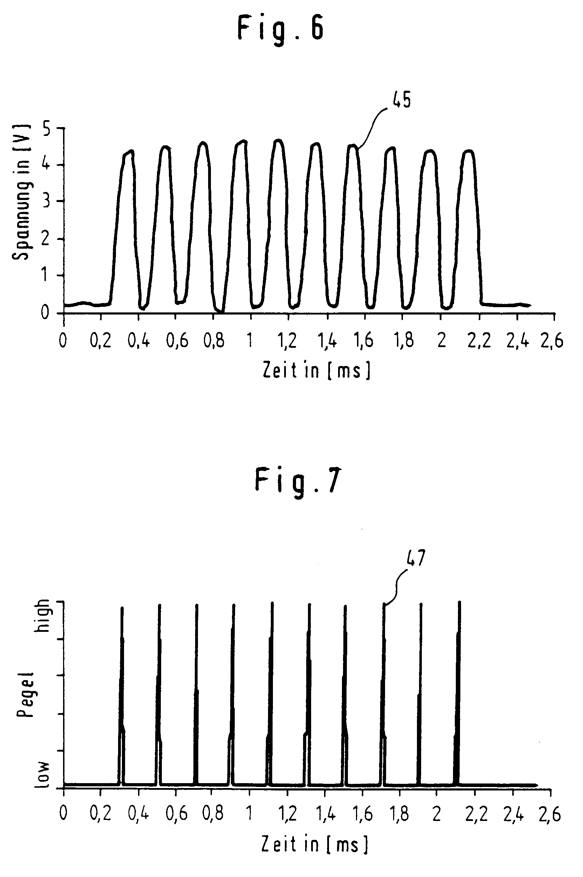

Fig. 6 zeigt eine während einer Abtastung des Rasters 40 erhaltene Impulsfolge, aufgetragen als Signalspannung gegen die Zeit. Jeder der zehn Impulse 45 geht auf eine Reflexion des Laserstrahls 44 an einem der zehn Codierstreifen 41 aus Fig. 5 zurück. Der in Fig. 6 gezeigten Impulsfolge liegt eine Abtastrate von 400 Hz (d.h. eine Drehgeschwindigkeit des Motors 34 von 400 UpS) und eine Codierstreifenbreite von einem Millimeter zugrunde.

Für die Intensitätsmodulierung des Laserstrahls 44 ist es üblicherweise ausreichend, wenn die Codierstreifen ein diffuses Streuvermögen aufweisen, das sich lediglich von dem Streuvermögen der zwischenliegenden Rasterbereiche unterscheiden muß. Die Codierstreifen 41 können jedoch auch als Spiegelreflexionsflächen ausgelegt sein und es ist ferner denkbar, daß bei einem durchsichtigen Werkstück ein Raster mit unterschiedlichem Transmissionsverhalten verwendet wird und der transmittierte Laserstrahl von der Photodiode mit Verstärkeranordnung 43 erfaßt wird.

Die Orientierung des Rasters 40 (entspricht der zweiten Richtung) muß nicht notwendigerweise koaxial zur Krafteinleitungsrichtung (erste Richtung) sein; bei Orientierung der Richtung des Rasters 40 unter einem vorgegebenen Winkel zu der Krafteinleitungsrichtung wird eine Messung der mechanisch-dynamischen Eigenschaften des Werk-

EP 0 862 053 A2

stücks schräg zur Krafteinleitungsrichtung ermöglicht.

Nach Fig. 3 wird das Wegsignal 17' anschließend in einer Signalumformerstufe 46' in eine Folge von diskreten Spikes umgewandelt, die zu definierten Zeiten auftreten und beispielsweise im Rahmen einer Analyse der Flankenanstiegszeiten der in Fig. 6 dargestellten Impulsfolge erhalten werden können. Das auf diese Weise umgeformte Wegsignal 17" liegt am Eingang eines Multistop-Counters 48 an, der einen von einem hochfrequenten Oszillator angetriebenen Zähler beinhaltet, wobei der Zähler von einem einlaufenden Spike angestoßen und von dem nachfolgenden Spike wieder angehalten wird. Die dadurch ermittelte Zeitinformation zwischen aufeinanderfolgenden Spikes wird in einem digitalen Zwischenspeicher 49 abgelegt, auf den ein Prozessor 50 einer Verarbeitungseinheit 51 Zugriff hat. Die Datenverarbeitungseinheit 51 besteht neben dem Prozessor 50 aus einem Programmspeicher 52, der mit dem Prozessor 50 in Verbindung steht. Der Programmspeicher 52 kann beispielsweise als Magnetplattenlaufwerk realisiert sein. In diesem Speicher 52 können unter anderem ein Prozeßsteuerprogramm 52a, ein Rechenprogramm 52b, ein Datenverarbeitungsprogramm 52c und ein Graphikprogramm 52d gespeichert sein.

Ferner unterscheidet sich der in Fig. 3 gezeigte erfindungsgemäße Prüfstand von dem bekannten Prüfstand nach Fig. 1 dadurch, daß anstelle des Reglers 30 ein Regler 30' vorgesehen ist, der neben dem Kraftsignal von der Kraftmeßdose 13 ein weiteres Ist-Eingangssignal von einem Wegsensor 53 empfängt, der mit dem Kolben 7 der servohydraulischen Prüfmaschine 1 gekoppelt ist und ein Signal ausgibt, das dem Verschiebeweg des Kolbens 7 entspricht. Durch den Wegsensor 53, den Regler 30' und das Servoventil 5 wird ein weiterer Regelkreis gebildet, der eine weggeregelte Schwingbelastung des Werkstücks 11 ermöglicht.

Bei der Wegregelung kann die Regelgenauigkeit erhöht werden, wenn zusätzlich in nicht dargestellter Weise auf Wegstreckeninformation zurückgegriffen wird, die vom Wegsignal 17' erhalten und im Prozessor 50 geeignet aufbereitet wird.

Der Funktionsgenerator 28' des erfindungsgemäßen Prüfstands kann im wesentlichen beliebig vorgebbare Belastungsverläufe erzeugen, die dann gemäß dem Regler 30' sowohl in kraft- oder weggesteuerter Betriebsweise der Schwingbewegung des Kolbens 7 zugrundelegt werden.

Nachfolgend wird die Arbeitsweise des erfindungsgemäßen Prüfstands beschrieben.

Zunächst wird mit Hilfe des Prozeßsteuerprogramms 52a der gewünschte Versuchsablauf durch Eingabe von Ablaufparametern definiert. Die Eingabeparameter umfassen insbesondere:

a) die Wahl der zu untersuchenden Teilabschnitte des Werkstücks. Beispielsweise kann vorgegeben werden, daß durch jeden Codierstreifen 41 ein Teilabschnitt des Werkstücks definiert wird, wodurch dann eine maximale Auflösung der Messung erhalten wird. Wenn nur kleinere Auflösungen erforderlich sind, können Teilabschnitte definiert werden, die sich jeweils aus mehreren Codierstreifen aufbauen. Ebenso ist es möglich, daß selektiv beispielsweise zwei bestimmte Teilabschnitte ausgewählt werden (z.B. die Abschnitte zwischen dem zweiten und vierten sowie dem siebten und neunten Codierstreifen 41) und nur diese Teilabschnitte hinsichtlich ihres Belastungsverhaltens untersucht werden. Durch Wahl geeigneter Teilabschnitte in Abhängigkeit von der Form und Art des untersuchten Werkstücks läßt sich bereits im Vorfeld der Untersuchung eine wesentliche Datenreduktion erreichen;

b) die Wahl einer geeigneten Abtastfrequenz, wodurch die zeitliche Auflösung der Untersuchung definiert wird. Um eine sinnvolle Beobachtung eines Schwingzyklus zu gewährleisten, muß die Abtastfrequenz größer sein als die Schwingfrequenz des Kolbens 7. Häufig wird die Abtastfrequenz mindestens um den Faktor 10 größer sein als die Schwingfrequenz;

c) die Wahl der Schwingfrequenz;

d) Die Wahl der Schwingungsform, beispielsweise sinusförmig, dreieckförmig oder rechteckförmig;

e) die Wahl des Belastungs- oder Längenänderungsbereichs bei kraft- bzw. weggeregelter Versuchsdurchführung;

f) bei Laststeigerungsversuchen insbesondere die Wahl der Last und Zeitdauer jeder Laststufe sowie die Wahl der Abfolge der ausgewählten Laststufen;

g) bei wiederholten Laststeigerungsversuchen die Wahl der Anzahl der Wiederholungen der bei f) vorgegebenen Laststeigerungsparameter.

Das Prozeßsteuerungsprogramm 52a kann darüber hinaus noch für die Überwachung weiterer Prozeßabläufe ausgelegt sein. Beispielsweise kann eine Heizquelle oder dergleichen über das Prozeßsteuerprogramm 52a von dem Prozessor 50 angesprochen werden.

Das Bezugszeichen 52b bezeichnet ein Rechenprogramm, das zur Verarbeitung der im Zwischenspeicher 49 abgelegten Zeitinformation der vorn Multistop-Counter ermittelten Spike-Zeitdifferenzen sowie zur Auswertung der für jeden gewählten Teilabschnitt des Werkstücks erhaltenen Hystereseschleife dient. Während des Meßbetriebs ruft das Rechenprogramm 52b für jeden interessierenden (zuvor über das Prozeßsteuerungsprogramm 52a festgelegten) Werkstück-Teilabschnitt die entsprechenden, im Zwischenspeicher 49 abgelegten Zeitinformationen ab und berechnet daraus für jeden Teilabschnitt Werte, die die Längenänderung des entsprechenden Teilabschnitts zwischen zwei Laserabtastungen bezeichnen. Die Umrechnung der in dem Zwischenspeicher 49 abgelegten Zeitdaten in Längendaten erfolgt dabei gemäß einer vor Versuchsbeginn ausgeführten Eichung, bei der das Meßsystem den Codierstreifenabstand des ungedehnten oder auch bereits vorbelasteten Werkstücks als Bezugslänge für die spätere Messung der Längenausdehnung selbstkalibrierend einlernt.

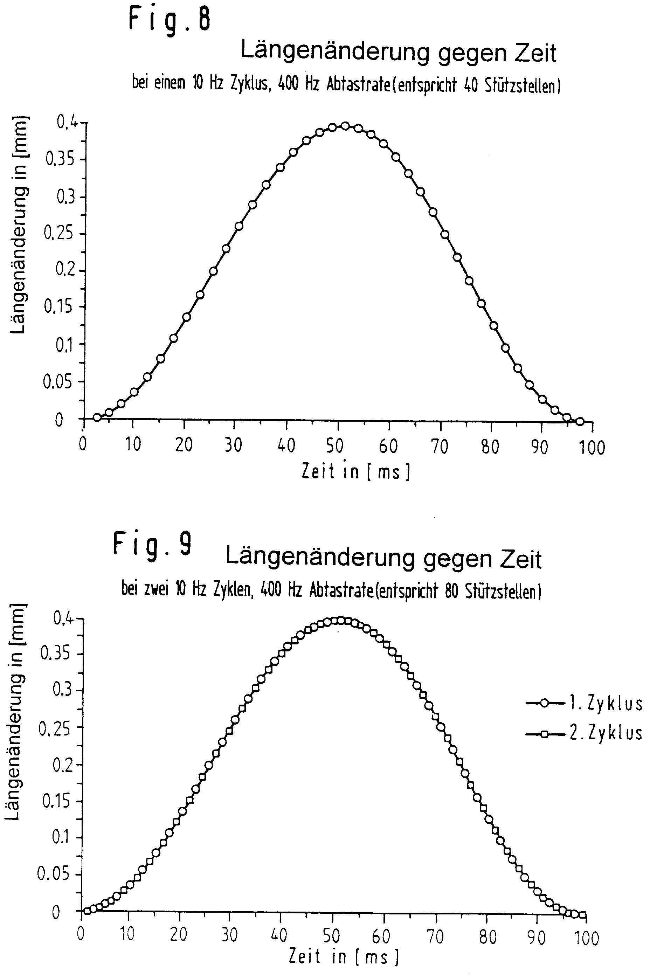

Fig. 8 zeigt die Längenänderung eines einzelnen Teilabschnitts während eines 10 Hz Belastungszyklus bei einer Laserabtastrate von 400 Hz. Die Längenänderung bewegt sich im betrachteten Beispiel im Bereich zwischen 0 und 0,4 mm und wird durch 40 Stützstellen dokumentiert, die durch die während eines Belastungszyklus durchgeführten 40 Laserabtastungen kumuliert wurden.

Fig. 9 zeigt ebenfalls die Längenänderung eines speziellen Teilabschnitts des Werkstücks, aufgetragen gegen die Zeit, wobei die Daten hier während zwei Belastungszyklen kumuliert wurden und somit der Verlauf der Längenänderungskurve auf der Messung von 80 Stützstellen basiert. Dabei bezeichnen Kreise die während des ersten Zyklus erhaltenen Stützstellen und Quadrate die während des zweiten Zyklus erhaltenen Stützstellen.

Eine derartige Kumulation von während aufeinanderfolgender Belastungszyklen erhaltener Meßpunkte ist nur dann sinnvoll, wenn Meßpunkte verschiedener Zyklen nicht zusammenfallen. Dies kann erreicht werden, indem die Abtastfrequenz zeitlich variiert („gewobbelt") wird oder asynchron zu der Belastungsfrequenz gewählt wird.

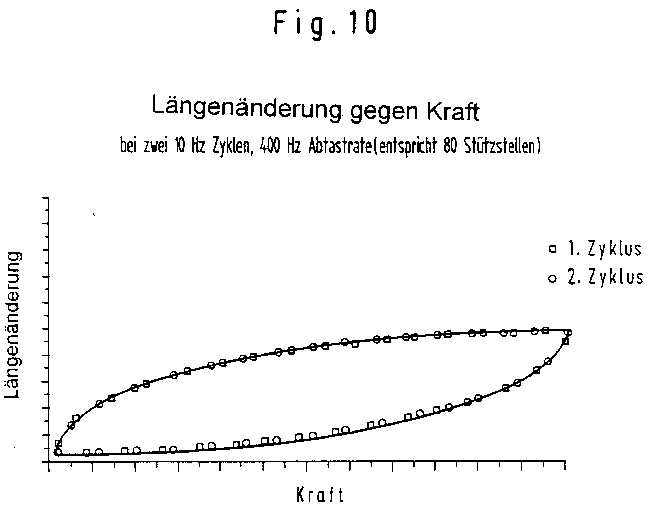

Fig. 10 zeigt die für den Fig. 9 zugrundeliegenden Werkstück-Teilabschnitt erhaltene Hystereseschleife. Hierfür ist in Fig. 10 die gemäß Fig. 8, 9 bestimmte Längenänderung auf der Y-Achse und die am Werkstuck in jedem Augenblick anliegende Kraft auf der X-Achse aufgetragen. Die Hystereseschleife wurde hier aus den während zwei Belastungszyklen erhaltenen Daten aufgebaut (siehe Fig. 9), wobei es jedoch genauso gut möglich ist, die für das Verformungsverhalten des Teilabschnitts charakteristische Hystereseschleife während eines einzigen Zyklus aufzubauen (siehe Fig. 8) oder hierfür Daten aus drei oder mehr Zyklen zu verwenden. Während bei der Verwendung von Daten nur weniger Zyklen zum Aufbau der Hystereseschleife prinzipiell auch sehr schnelle Änderungen des Belastungsverhaltens gemessen werden können bietet die Kumulierung von Daten über mehrere Zyklen den Vorteil einer höheren Auswertegenauigkeit der erhaltenen Hystereseschleife.

Beispielsweise werden bei einem Dauerversuch 100000 Schwingzyklen ausgeführt, wobei jeweils fünf Zyklen zum Aufbau einer lokalen Hystereseschleife herangezogen werden. Zwischen der Aufnahme zweier Hystereseschleifen folgen jeweils 100 Schwingzyklen ohne Datenaufnahme, wobei diese Anzahl verringert werden kann, wenn schnellere Änderungen des Materialverhaltens überwacht werden sollen.

Die Auswertung der in Fig. 10 gezeigten Hystereseschleife wird in der an sich bekannten Weise (siehe Fig. 2a, 2b oder 2c) von dem Rechenprogramm 52b durchgeführt, wobei jedoch zu beachten ist, daß im Unterschied zum Stand der Technik jetzt für jeden der ausgewählten Teilabschnitte des Werkstückes eine Hystereseschleife ausgewertet werden muß und damit ein höherer Rechenaufwand anfällt.

Neben der Kumulierung von Daten sollte zur Erzielung einer hohen Meßgenauigkeit vorzugsweise das nachfolgend erläuterte Interpolations-Auswerteverfahren angewendet werden. Dieses Verfahren berücksichtigt und korrigiert den Umstand, daß aufgrund der endlichen Abtastgeschwindigkeit des Laserstrahls die Codierstreifen 41 des Rasters 40 nicht zeitgleich sondern mit einer gewissen zeitlichen Verzögerung erfaßt werden. Diese zeitliche Verzögerung hat zur Folge, daß die ermittelten Dehnungswerte gegenüber den Werten der tatsächlichen Dehnung eine Phasenverschiebung aufweisen. Das ist unerwünscht, weil diese durch die Messung erzeugte "fiktive" Phasenverschiebung in die Phasenverschiebung $\phi$ eingeht, die bei der Hysteresis-Auswertung zur Charakterisierung des Materialverhaltens bestimmt wird.

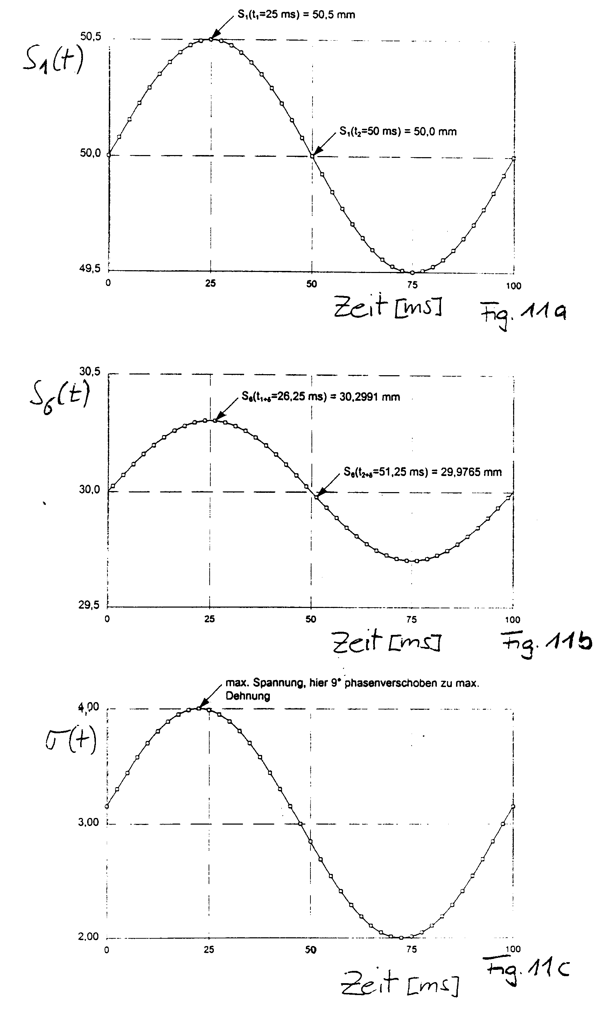

Das Interpolations-Auswerteverfahren wird nachfolgend anhand der Fig. 11a bis Fig. 15 erläutert.

Fig. 11a zeigt die Ortskoordinate der Schwingung eines ersten Codierstreifens $S_1$ aufgetragen gegen die Zeit. Der Darstellung liegt eine Abtastrate von 400 Hz bei einer Belastungsfrequenz von 10 Hz zugrunde. Die während eines Belastungszyklus vorgesehenen 40 Stützstellen weisen einen zeitlichen Abstand von 2,5 ms auf.

Fig. 11b zeigt die gleiche Information wie Fig. 11a für einen anderen Codierstreifen $S_6$, der 20 mm von dem in Fig. 11a dargestellten ersten Codierstreifen $S_1$ entfernt liegt. Die Stützstellen sind gegenüber der Darstellung in Fig. 11a jeweils um 1,25 ms verschoben, weil der Laserfleck diese Zeit benötigt, um die Strecke zwischen den beiden Streifen $S_1$, $S_6$ zu überstreichen.

Fig. 11c zeigt den zeitlichen Verlauf der gemessenen Spannung $\sigma(t)$. Dieser weist aufgrund von Materialeffekten eine Phasenverschiebung zu den in den Fig. 11a und 11b gezeigten Schwingungsverläufen auf. In dem dargestellten Beispiel beträgt die Phasenverschiebung 9°. Die Werte der Spannung $\sigma(t)$ werden zeitgleich mit den Ortskoordinaten des ersten Codierstreifens $S_1$ aufgezeichnet, d.h. an den Stützstellen der Fig. 11a.

An diesen Stützstellen liegen für den Codierstreifen $S_6$ jedoch keine Ortskoordinatenwerte vor. Dies führt dazu, daß die für die Längenänderung des Abschnitts zwischen den beiden Codierstreifen $S_1$ und $S_6$ erhaltenen Werte nicht genau der tatsächlichen Längenänderung entsprechen.

Dies soll anhand eines Beispiels verdeutlicht werden. Nach t=50 ms (einem Halbzyklus) muß die tatsächliche relative Längenänderung bei homogenem Werkstückverhalten überall (und somit auch zwischen den Streifen $S_1$ und $S_6$) gleich 0 sein. Da jedoch zu dem Zeitpunkt t=50 ms für den zweiten Codierstreifen $S_6$ keine Stützstelle und damit auch kein Ortskoordinatenwert existiert, ergibt sich eine relative Längenänderung, die von 0 verschieden ist:

$$[S_1(t=50 \text{ ms}) - S_1(t=0 \text{ ms})] - [S_6(t=51,25 \text{ ms}) - S_6(t=0 \text{ ms})] = [0] - [29,9765-30] = 0,0235 \text{ mm}$$

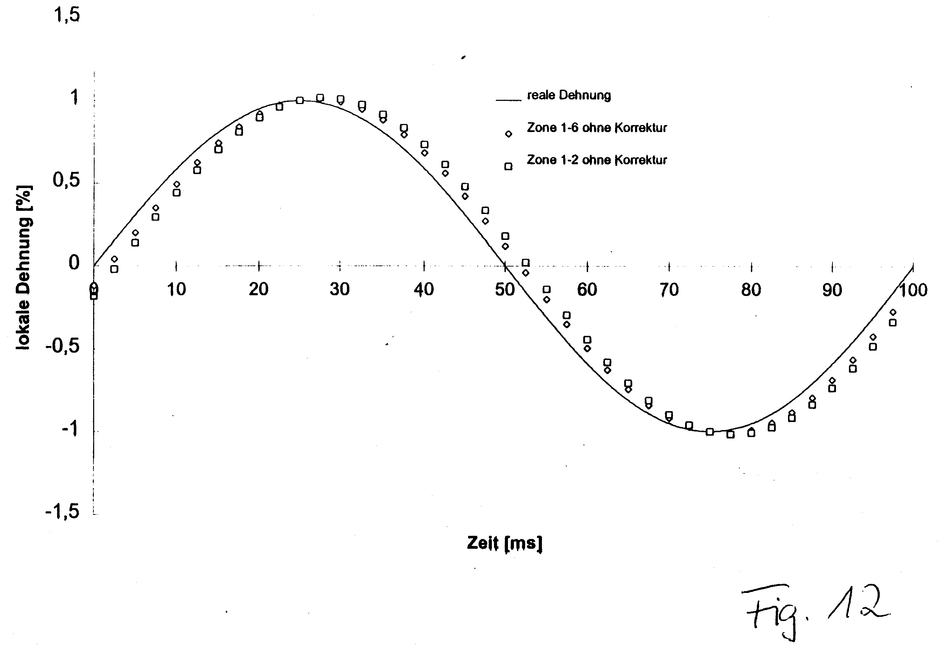

Diese "fiktive" Längenänderung hat zur Folge, daß sowohl die Phase als auch die Amplitude der berechneten relativen Dehnung von dem Verlauf der tatsächlichen relativen Dehnung abweicht. Dieser Sachverhalt ist in Fig. 12 graphisch dargestellt. Die durchgezogene Kurve stellt die reale lokale Dehnung (in %) dar, während die mit einer Raute ◊ bezeichneten Werte das (unkorrigierte) Dehnungsverhalten zwischen den Streifen $S_1$ und $S_6$ (20 mm Abstand) und die mit einem Quadrat □ gekennzeichneten Dehnungswerte das (unkorrigierte) Dehnungsverhalten zwischen dem ersten Codierstreifen $S_1$ und einem unmittelbar benachbarten Codierstreifen $S_2$ (4 mm Abstand) angeben. Beide Meßwertverläufe weichen von der realen Dehnung deutlich ab.

Das erfindungsgemäße Auswerteverfahren basiert nun im wesentlichen darauf, daß in der Fig. 11b die "fehlenden" Stützstellen hinzugefügt werden (das sind die in den Fig. 11a bzw. 11c verwendeten Stützstellen, z.B. $t_i$ = 25 ms) und die zugehörigen Ortskoordinatenwerte von $S_6$ durch eine Kurveninterpolation gewonnenwerden.

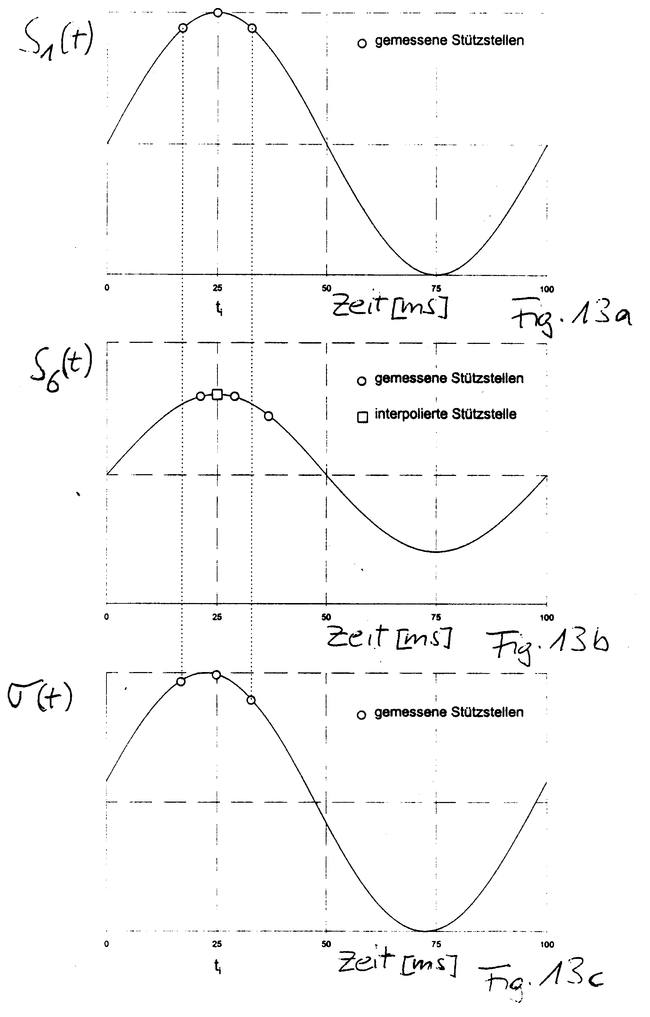

Der Interpolationsschritt wird anhand der Fig. 13a, 13b und 13c verdeutlicht. Die Fig. 13a, 13b und 13c entsprechen jeweils den Fig. 11a, 11b und 11c, wobei zur besseren Übersichtlichkeit jedoch größere Stützstellenabstände eingezeichnet sind. Es ist erkennbar, daß zu den diskreten Zeitpunkten $t_i$ zusätzliche Stützstellen □ generiert werden und die entsprechenden Funktionswerte $S_6(t_i)$ an den zusätzlichen Stützstellen □ durch Interpolation bestimmt und als Ausgangswerte für die weiteren Berechnungen verwendet werden.

Zur Interpolation kann ein Polynom erster oder höherer Ordnung verwendet werden.

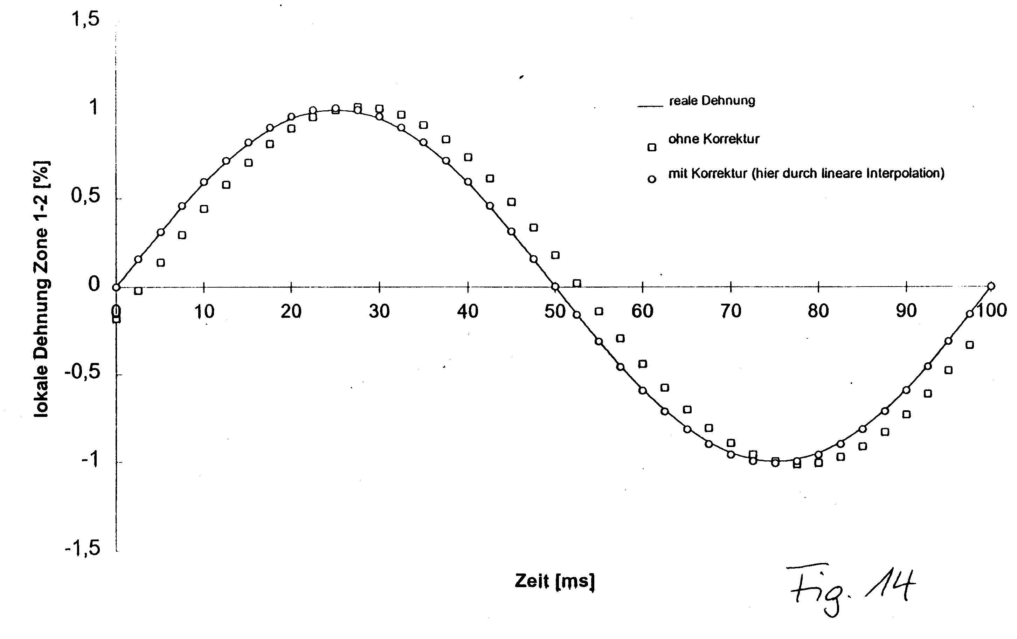

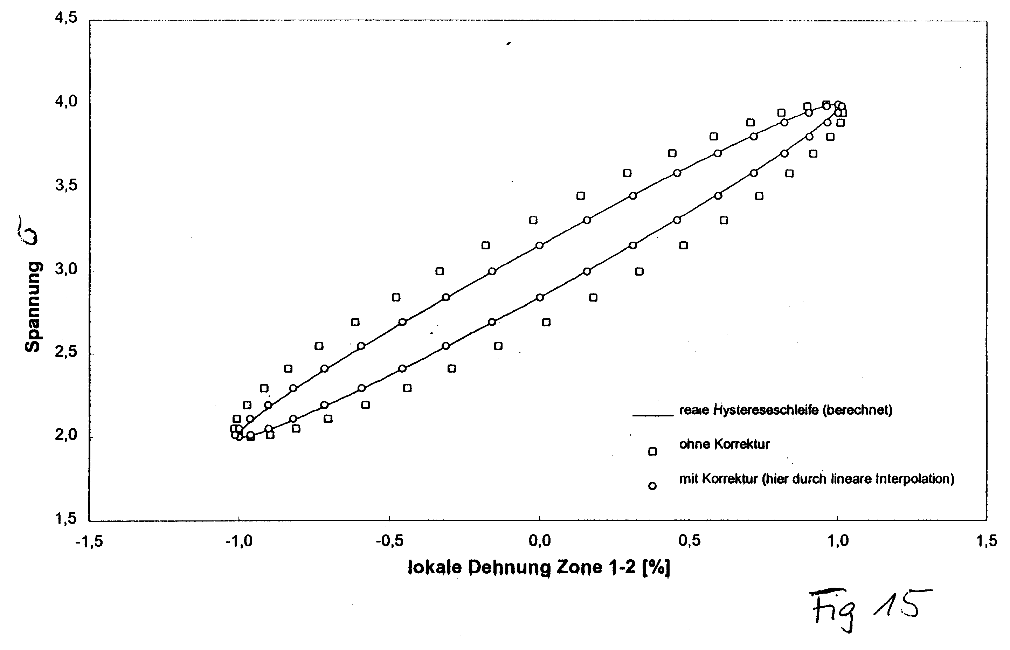

In den Fig. 14 und 15 sind für die Dehnung (Fig. 14) bzw. die Hystereseschleife (Fig. 15) sowohl die ohne Korrektur erhaltenen Werte □ als auch die mit der Korrektur erhaltenen Werte o eingezeichnet. Es zeigt sich in beiden Fällen, daß bereits eine lineare Interpolation zu einer deutlichen Verbesserung der Meßergebnisse führt.

Als charakteristische Größen können bei der Auswertung der Hystereseschleife beispielsweise die Werte der Werkstoffdämpfung $\Lambda$, der Werkstoffsteifigkeit $\tan\alpha_1$, $\tan\alpha_2$ der Mitteldehnung $\varepsilon_{mittel}$ der plastischen Dehnung $\varepsilon_p$ oder der Verlustarbeit bestimmt werden. Aufgrund der vorgenommenen Korrektur charakterisieren diese Größen nun ausschließlich das Materialverhalten.

Die weitere Verarbeitung der erhaltenen charakteristischen Größen wird mit Hilfe des Datenverarbeitungsprogramms 52c durchgeführt. Diese Datenverarbeitung kann je nach Wunsch insbesondere die folgenden Funktionen umfassen:

a) den Vergleich der für verschiedene Teilabschnitte erhaltenen Werte einer bestimmten charakteristischen Größe bzw. die Ableitung der Teilabschnitts-Werteverteilung nach dem Ort. Dadurch lassen sich Aussagen hinsichtlich lokal unterschiedlichem Werkstoffverhalten bei Schwingbeanspruchung treffen;

b) den Vergleich der zeitlichen Verläufe der für unterschiedliche Teilabschnitte erhaltenen Werte. Dadurch lassen sich lokal unterschiedliche Schädigungsgeschwindigkeiten des Werkstückes erkennen;

c) im Rahmen von wiederholten Laststeigerungsversuchen den Vergleich der während einer ersten Laststeigerungsabfolge gewonnenen Teilabschnittswerte einer charakteristischen Größe mit den entsprechenden (d.h. bei gleichem Lastniveau) gewonnenen Werten bei einer nachfolgenden Laststeigerungsabfolge. Dieser Vergleich gibt Aufschlüsse über Belastungsgrenzen, oberhalb derer irreversible Schädigungsprozesse bei Belastungswechseln auftreten.

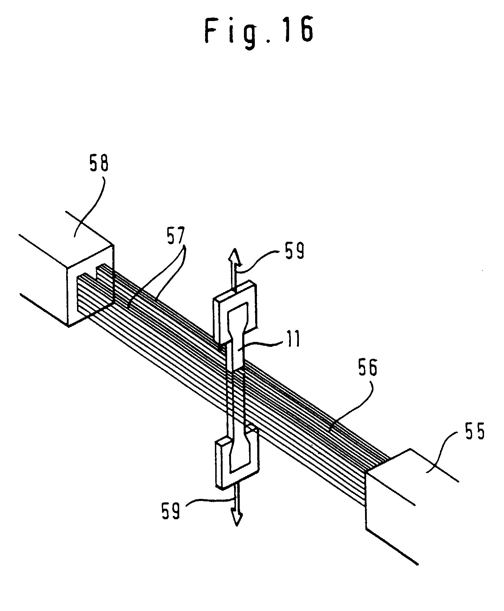

Ferner kann im Rahmen des Datenverarbeitungsprogramms auch eine Verarbeitung von weiteren, dem Prozessor 50 zugeführten Meßwerten wie beispielsweise Querausdehnungs-Meßwerten (siehe auch Fig. 16) oder Temperaturmeßwerten vorgesehen sein.

Schließlich kann optional ein Graphikprogramm 52d vorgesehen sein, das die vom Rechenprogramm 52b ermittelten Werte für die charakteristischen Größen oder die von dem Datenverarbeitungsprogramm 52c ermittelten Vergleichswerte laufend derart umwandelt, daß sie im Rahmen einer Graphikdarstellung über einen Monitor, beispielsweise anhand einer Falschfarben-Darstellung des Werkstücks, sichtbar gemacht werden können. Da die gesamte Auswerteschaltung einschließlich dem Multistop-Counter 48, dem Zwischenspeicher 49 und der Datenverarbeitungseinheit 51 bei geeigneter Auslegung in Echtzeit betreibbar ist, ermöglicht das Graphikprogramm 52d die Verfolgung jeder gewünschten charakteristischen Größe in bezug auf ihre Verteilung über das Werkstück und ihre zeitliche Entwicklung während des Versuchsablaufs. Dadurch können in einem einzigen Versuch Daten über das Belastungsverhalten insbesondere von inhomogenen oder mehrkomponentigen Werkstücken gewonnen werden, die bisher überhaupt nicht oder nur unter großem Aufwand durch eine Vielzahl von nacheinander durchgeführten Messungen an möglichst identischen Werkstücken (die in der Praxis niemals völlig identisch sind) gewonnen werden konnten.

Zusammenfassend ist daher davon auszugehen, daß die Erfindung einen wesentlichen Fortschritt im Bereich der Beurteilung des Belastungs- und Ermüdungsverhaltens von unterschiedlichsten Werkstücken ermöglichen wird.

Fig. 16 dient zur Erläuterung einer weiteren verschiedentlich bereits angesprochenen Ausführungsvariante des erfindungsgemäßen Verfahrens, die eine Messung der Querausdehnung des Werkstücks 11 und somit eine Berechnung deren Poisson-Zahl ermöglicht. Das Werkstück 11 wird dabei von einem von einer Lichtquelle 55 ausgesendeten stationären Lichtbündel 56 einer Breite, die größer als die Querausdehnung des Werkstücks 11 ist, bestrahlt, so daß das Werkstück 11 nur einen Teil des Lichtbündels 56 abschattet und zwei Restlichtbündel 57 zu beiden Seiten des Werkstücks 11 an diesem vorbeitreten. Die Restlichtbündel 57 fallen auf einen Detektor 58, der ein Signal ausgibt, das die Intensität der empfangenen Restlichtbündel 57 wiedergibt und somit ein Maß für die augenblickliche Breite des Werkstücks 11 ist. Wird das Werkstück 11 im Rahmen einer Zugbeanspruchung gemäß den Pfeilen 59 gedehnt, verringert sich seine Breite, so daß die Abschattung geringer wird und die Intensität der Restlichbündel 57 zunimmt. Entsprechend bewirkt eine Druckbeanspruchung des Werkstücks 11 eine Verbreiterung des Werkstücks und somit eine Verringerung der vom Detektor 58 erfaßten Restlichtintensität. Die Höhe des Lichtbündels 56 kann entsprechend der gewünschten Auflösung variiert werden. Das Ausgangssignal des Detektors 58 kann gegebenenfalls nach einer Verstärkung und einer Digitalisierung dem Prozessor 50 in nicht dargestellter Weise zugeführt und bei der Signalauswertung berücksichtigt werden.

Während bei dem anhand von Fig. 16 erläuterten Meßverfahren lediglich eine Änderung der Gesamtbreite des Werkstücks beobachtet werden kann, kann gemäß einer weiteren Ausführungsvariante auch die Änderung der Breitenverteilung über die Werkstückbreite gemessen werden. Hierfür ist es erforderlich, das Werkstück 11 mit einem weiteren Raster aus kontrastierenden Codierstreifen zu versehen, wobei die Codierstreifen im Unterschied zu dem in Fig. 5 dargestellten Raster nun in Längsrichtung verlaufen. Die Messung der Änderung der Breitenverteilung des Werkstückes 11 erfolgt dann analog zu der im Zusammenhang mit Fig. 4 bereits beschriebenen Ermittlung der Längendehnungsverteilung des Werkstückes 11, wobei der das weitere Raster abtastende Laserstrahl anders als in Fig. 4 nun in Querrichtung und nicht in Längsrichtung über das Werkstück zu führen ist. Die Signalverarbeitung und Auswertung des auf diese Weise erhaltenen Querausdehnungssignals (analog zum Wegsignal 17') erfolgt im wesentlichen in gleicher Weise wie dies bereits im Zusammenhang mit der Längendehnungsmessung beschrieben wurde.

Die gleichzeitige Messung der Quer- und Längendehnungsverteilung an ein und demselben Werkstück 11 während eines Versuches ermöglicht die Untersuchung des lokalen Werkstoffverhaltens in zwei Dimensionen und liefert daher zusätzliche Information bezüglich lokaler Phänomene, wie beispielsweise Rißbildungen oder ähnliches im Werkstück. In nicht dargestellter Weise kann ferner vorgesehen sein, daß das Werkstück während der Versuchsdurchführung lokal oder über den gesamten untersuchten Werkstückabschnitt erwärmt oder abgekühlt wird, wobei die Erwärmung bzw. Abkühlung vorzugsweise kontaktfrei durchgeführt werden und bezüglich der Erwärmung beispielsweise induktiv oder über ein von einer Erwärmungslichtquelle ausgesendetes Erwärmungslichtbündel erfolgen kann. Derartige Untersuchungen können Aufschluß über die Temperaturabhängigkeit des Ermüdungsverhaltens eines Werkstücks unter Schwingbelastung geben.

Eine Vorrichtung zur Durchführung des erfindungsgemäßen Verfahrens ist nicht auf die in Zusammenhang mit den Fig. 1 bis 16 beschriebenen Ausführungsformen begrenzt. Beispielsweise kann die servohydraulische Prüfmaschine 1 durch einen elektrisch betriebenen Pulsator mit entsprechender Ansteuerungsschaltung ersetzt sein. Ferner ist die Verwendung eines Multistop-Counters 48 sowie eines Zwischenspeichers 49 zur Verarbeitung des gegebenenfalls umgeformten Wegsignals 17" nicht zwingend notwendig, da eine entsprechende Gewinnung der Teilabschnitts-Längenänderungsdaten auch im Rahmen einer Fast-Fourier-Analyse (FFA) des Wegsignals 17" allein durch den Prozessor 50 durchgeführt werden kann.

Bezugszeichenliste

| 1 | servohydraulische Prüfmaschine |
|---|---|
| 2 | Hydraulikpumpe |
| 3 | Elektromotor |
| 4 | Reservoir |
| 5 | Servoventil |
| 6 | Kolben-Zylinderanordnung |
| 7 | Kolben |
| 8 | Kolbenstange |

| | |
|---|---|
| 9 | freies Ende der Kolbenstange |
| 10 | Werkstückende |
| 11 | Werkstück |
| 12 | anderes Werkstückende |
| 13 | Kraftmeßdose |
| 14 | Rahmen |
| 15 | Ausgangssignal der Kraftmeßdose |
| 16 | Clip-On-Extensometer |
| 17 | Wegsignal des Clip-On-Extensometers |
| 17' | Wegsignal des Laser-Extensometers |
| 17" | umgeformtes Wegsignal |
| 18, 19 | Verstärker |
| 20, 21 | A/D-Wandler |
| 22 | Digitalspeicher |
| 23 | Computer |
| 24 | Massenspeicher |
| 25 | Drucker |
| 26 | Plotter |
| 27 | Steuerausgang |
| 28 | Funktionsgenerator |
| 28' | Funktionsgenerator |
| 29 | Sollwert-Signal |
| 30 | Regler |
| 31 | Regelsignal |
| 32 | Verstärker |
| 33 | Laser-Extensometer |
| 34 | Motor |
| 35 | Motorwelle |
| 36 | Drehspiegel |
| 37 | Laser |
| 38 | Laserstrahl |
| 39 | Zylinderlinse |
| 40 | Raster |
| 41 | Codierstreifen |
| 42 | Sammellinse |
| 43 | Photodiode mit Verstärkeranordnung |
| 44a-d | Laserstrahlen |
| 45 | Impuls |
| 46 | Signalformungsstufe |
| 47 | Spike |
| 48 | Multistopp-Counter |
| 49 | Zwischenspeicher |
| 50 | Prozessor |
| 51 | Datenverarbeitungseinheit |
| 52 | Programmspeicher |
| 52a | Prozeßsteuerungsprogramm |
| 52b | Rechenprogramm |
| 52c | Datenverarbeitungsprogramm |
| 52d | Graphikprogramm |
| 53 | Wegsensor |
| 54 | Monitor |
| 55 | Lichtquelle |
| 56 | Lichtbündel |
| 57 | Restlichtbündel |
| 58 | Detektor |
| 59 | Pfeil in Zugrichtung |

**Patentansprüche**

1. Verfahren zur Untersuchung der mechanisch-dynamischen Eigenschaften eines Werkstückes (11), wobei

   das Werkstück (11) entlang einer ersten Richtung einer zyklischen Zug- und/oder Druckbeanspruchung ausgesetzt wird,
   mittels einer Krafterfassungseinrichtung (13) ein die Zug- und/oder Druckbeanspruchung des Werkstuckes repräsentierendes Kraftsignal (15) erzeugt wird,
   mittels einer Wegstrecken-Erfassungseinrichtung (33) ein eine Längenänderung zumindest eines vorgegebenen Abschnitts des Werkstückes (11) repräsentierendes Wegstreckensignal (17') erzeugt wird und wobei
   das Kraftsignal (15) und das Wegstreckensignal (17') einer Auswerteeinrichtung (48, 49, 51) zugeführt werden, die aus dem während einem oder mehrerer Beanspruchungszyklen erhaltenen Kraftsignal (15) und Wegstreckensignal (17') wenigstens eine der für die mechanisch-dynamischen Eigenschaften des vorgegebenen Abschnitts des Werkstücks (11) in bezug auf sein Dämpfungsverhalten bzw. Zug- und/oder Drucksteifigkeitsverhalten bzw. nichtelastisches Deformationsverhalten bzw. plastisches Dehnungsverhalten charakteristischen Größen ($\Lambda$; $\tan\alpha_1$, $\tan\alpha_2$ ; $\varepsilon_{mittel}$; $\varepsilon_p$) bestimmt,
   **dadurch gekennzeichnet, daß**
   das entlang einer zweiten Richtung mit einem Raster (40) aus kontrastierenden Codierstreifen (41) versehene Werkstück (11) im Rahmen der Wegstreckenerfassung laufend entlang seiner zweiten Richtung unter einer vorgegebenen Abtastfrequenz von einem Laserstrahl (44a-d) überstrichen wird, wobei
   die Abtastfrequenz des Laserstrahls (44a-d) größer ist als die Frequenz, mit der das Werkstück (11) zyklisch zug- und/oder druckbeansprucht wird,
   die Intensität des von den Codierstreifen (41) des Rasters (40) modulierten Laserlichts erfaßt wird und deren zeitlicher Verlauf das Wegstreckensignal (17') bildet, und wobei
   die Auswerteeinrichtung (48, 49, 51) aus dem zeitlichen Verlauf des Wegstreckensignals (17') die Längenänderungen unterschiedlicher jeweils durch zwei oder mehr benachbarte Codierstreifen (41) definierte Teilabschnitte des vom Laserlicht überstrichenen Werkstückabschnitts ermittelt und
   die für die mechanisch-dynamischen Eigenschaften charakterische(n) Größe(n) ($\Lambda$; $\tan\alpha_1$, $\tan\alpha_2$ ; $\varepsilon_{mittel}$; $\varepsilon_p$) der unterschiedlichen Teilabschnitte des Werkstücks (11) bestimmt.

2. Verfahren nach Anspruch 1, dadurch gekennzeichnet, daß die erste Richtung mit der zweiten Richtung zusammenfällt.

3. Verfahren nach einem der Ansprüche 1 oder 2, dadurch gekennzeichnet daß die Abtastfrequenz des Laserstrahls (44a-d) wenigstens um den Faktor 10 größer ist als die Frequenz, mit der das Werkstück (11) zyklisch zug- und/oder druckbeansprucht wird.

4. Verfahren nach einem der vorhergehenden Ansprüche, dadurch gekennzeichnet, daß

   die Auswerteeinrichtung (48, 49, 51) bei der Berechnung der Längenänderungen der unterschiedlichen Teilabschnitte:
   einer jeden Laserabtastung eine bestimmte absolute Referenzzeit ($t_i$) zuordnet,
   und
   für jede Laserabtastung die Ermittlung der Längenänderungen der unterschiedlichen Teilabschnitte bezüglich der jeweils zugeordneten Referenzzeit ($t_i$) erfolgt.

5. Verfahren nach einem der vorhergehenden Ansprüche, dadurch gekennzeichnet, daß

   das Kraftsignal (15) mittels eines A/D-Wandlers (20) digitalisiert wird, aus dem gegebenenfalls zuvor impulsumgeformten Wegstreckensignal (17', 17") für jeden Teilabschnitt des Werkstücks (11) ein digitales Teilabschnitt-Längenänderungssignal gewonnen wird, das die Längenänderung des entsprechenden Teilabschnitts zwischen zwei aufeinanderfolgenden Laserabtastungen repräsentiert,
   und
   aus dem digitalen Kraftsignal und den digitalen Teilabschnitt-Längenänderungssignalen mittels eines in einer Datenverarbeitungseinheit (51) gespeicherten Rechenprogramms (52b) für einen oder mehrere Belastungszyklen und für jeden Teilabschnitt des Werkstücks (11) die charakteristische(n) Größe(n) ($\Lambda$; $\tan\alpha_1$, $\tan\alpha_2$ ; $\varepsilon_{mittel}$; $\varepsilon_p$) bestimmt wird bzw. werden.

6. Verfahren nach einem der vorhergehenden Ansprüche, dadurch gekennzeichnet, daß über den gesamten vom Laserstrahl (44a-d) überstrichenen Werkstückabschnitt der Dämpfungsverteilungsverlauf und/oder der Zug- und/oder Drucksteifigkeitsverlauf und/oder der Verlauf der nichtelastischen Deformationsverteilung ermittelt wird.

7. Verfahren nach einem der vorhergehenden Ansprüche, dadurch gekennzeichnet, daß die zyklische Beanspruchung im Zug-, Druck- oder Zug-Druck-Wechselbereich durchgeführt wird.

8. Verfahren nach einem der vorhergehenden Ansprüche, dadurch gekennzeichnet, daß das Werkstück (11) ein von einer Lichtquelle (55) ausgesendetes stationäres Lichtbündel (56) mit einer Querausdehnung, die größer als die Querausdehnung des Werkstücks (11) ist, teilweise abschattet, und daß die Intensität des nicht von dem Werkstück (11) abgeschatteten Restlichts von einem Detektor (58) erfaßt und in ein die Querausdehnung des Werkstücks (11) charakterisierendes Signal umgewandelt wird.

9. Verfahren nach Anspruch 8, dadurch gekennzeichnet, daß die Ausdehnung des von dem Lichtbündel (56) auf dem Werkstück (11) erzeugten Lichtflecks in der zweiten Richtung im wesentlichen der Länge eines oder mehrerer betrachteter Teilabschnitte des Werkstückes (11) entspricht.

10. Verfahren nach einem der Ansprüche 1 bis 7, dadurch gekennzeichnet, daß das Werkstück (11) in einer dritten Richtung mit einem weiteren Raster aus kontrastierenden Codierstreifen versehen ist, das Werkstück (11) entlang der dritten Richtung unter einer weiteren Abtastfrequenz von einem weiteren Laserstrahl überstrichen wird, wobei die weitere Abtastfrequenz des weiteren Laserstrahls größer und insbesondere um den Faktor 10 größer ist als die Frequenz, mit der das Werkstück zyklisch zug- und/oder druckbeansprucht wird, die Intensität des von den Codierstreifen des weiteren Rasters modulierten weiteren Laserstrahls erfaßt wird und deren zeitlicher Verlauf ein weiteres Wegstreckensignal bildet, das der Auswerteeinrichtung (48, 49, 51) zugeführt wird, aus dessen zeitlichem Verlauf die Auswerteeinrichtung (48, 49, 51) die Dehnungsverteilung des Werkstückes (11) entlang der dritten Richtung im Bereich des weiteren Rasters lokal bestimmt.

11. Verfahren nach Anspruch 10, dadurch gekennzeichnet, daß die dritte Richtung senkrecht zu der ersten Richtung verläuft, derart, daß das weitere Wegstreckensignal für die Querausdehnungsverteilung des Werkstücks (11) charakteristisch ist.

12. Verfahren nach einem der Ansprüche 8 bis 11, dadurch gekennzeichnet, daß das die Querausdehnung oder das die Querausdehnungsverteilung des Werkstücks (11) charakterisierende Signal mit dem die Längenänderung eines oder mehrerer Teilabschnitte des Werkstücks (11) charakterisierenden Signal gegebenenfalls nach einer Eichung verglichen wird.

13. Vorrichtung zur Untersuchung der mechanisch-dynamischen Eigenschaften eines Werkstücks, bestehend aus:

einem Pulsator (1), der das Werkstück (11) entlang einer ersten Richtung einer zyklischen Zug- und/oder Druckbeanspruchung aussetzt,
einer Krafterfassungseinrichtung (13), die ein die Zug- und/oder Druckbeanspruchung des Werkstücks repräsentierendes Kraftsignal (15) erzeugt,
einer Wegstrecken-Erfassungseinrichtung (33), die ein eine Längenänderung zumindest eines vorgegebenen Abschnitts des Werkstücks (11) repräsentierendes Wegstreckensignal (17') erzeugt, sowie
einer Auswerteeinrichtung (48, 49, 51), der das Kraftsignal (15) und das Wegstreckensignal (17') zugeführt werden und die aus dem während einem oder mehreren Beanspruchungszyklen erhaltenen Kraftsignal (15) und Wegstreckensignal (17') wenigstens eine der für die mechanisch-dynamischen Eigenschaften des vorgegebenen Abschnitts des Werkstucks (11) in bezug auf sein Dämpfungsverhalten bzw. Zug- und/oder Drucksteifigkeitsverhalten bzw. nichtelastisches Deformationsverhalten bzw. plastisches Dehnungsverhalten charakteristischen Größen ($\Lambda$; $\tan\alpha_1$, $\tan\alpha_2$; $\varepsilon_{mittel}$; $\varepsilon_p$) bestimmt,
**dadurch gekennzeichnet, daß**
die Wegstrecken-Erfassungseinrichtung (33) einen Laser (37) umfaßt, dessen Laserstrahl (44a-d) das entlang einer zweiten Richtung mit einem Raster (40) aus kontrastierenden Codierstreifen (41) versehene Werkstück (11) laufend entlang der zweiten Richtung unter einer vorgegebenen Abtastfrequenz überstreicht, wobei die Abtastfrequenz des Laserstrahls (44a-d) größer ist als die Frequenz, mit der das Werkstück (11) zyklisch zug- und/oder druckbeansprucht wird,
die Wegstrecken-Erfassungseinrichtung (33) ferner eine Photoempfangsanordnung (43) umfaßt, die die Intensität des von den Codierstreifen (41) des Rasters (40) modulierten Laserlichts erfaßt und deren zeitlichen Verlauf als Wegstreckensignal (17') ausgibt, und die Auswerteeinrichtung (48, 49, 51) aus dem zeitlichen Verlauf des Wegstreckensignals die Längenänderungen unterschiedlicher, jeweils durch zwei oder mehr benachbarte Codierstreifen (41) definierte Teilabschnitte des von dem Laserlicht überstrichenen Werkstückabschnitts ermittelt und die für die mechanisch-dynamischen Eigenschaften charakteristische(n) Größe(n) ($\Lambda$; $\tan\alpha_1$, $\tan\alpha_2$; $\varepsilon_{mittel}$; $\varepsilon_p$) für die unterschiedlichen Teilabschnitte des Werkstücks (11) bestimmt.

14. Vorrichtung nach Anspruch 13, dadurch gekennzeichnet, daß die Teilabschnitte des Werkstücks (11) jeweils durch zwei aufeinanderfolgende Codierstreifen (41) des Rasters (40) definiert sind.

15. Vorrichtung nach einem der Ansprüche 13 oder 14, dadurch gekennzeichnet, daß der Mittenabstand zweier aufeinanderfolgender Codierstreifen (41) im Bereich von 0,5 bis 10 mm, insbesondere im Bereich von 2 bis 5 mm liegt.

16. Vorrichtung nach einem der Ansprüche 13 bis 15, gekennzeichnet durch eine Heizeinrichtung oder Kühleinrichtung, die das Werkstück (11) gegebenenfalls lokal und/oder vorübergehend erwärmt bzw. abkühlt.

17. Vorrichtung nach Anspruch 16, dadurch gekennzeichnet, daß die Heiz- oder Kühleinrichtung eine kontaktfreie Erwärmung bzw. Abkühlung des Werkstückes (11) ermöglicht und im Falle einer Heizeinrichtung insbesondere durch eine Induktionsheizung und/oder einen Umluftofen und/oder einer auf das Werkstück (11) gerichteten Erwärmungslichtquelle realisiert ist.

# Fig.1

EP 0 862 053 A2

EP 0 862 053 A2

**Fig. 2a**

**Fig. 2b**

# Fig. 2c

# Fig. 3

# Fig.4

# Fig.5

# Fig. 6

# Fig. 7

## Fig.8

### Längenänderung gegen Zeit

bei einem 10 Hz Zyklus, 400 Hz Abtastrate(entspricht 40 Stützstellen)

## Fig.9 Längenänderung gegen Zeit

bei zwei 10 Hz Zyklen, 400 Hz Abtastrate(entspricht 80 Stützstellen)

# Fig. 10

## Längenänderung gegen Kraft

bei zwei 10 Hz Zyklen, 400 Hz Abtastrate(entspricht 80 Stützstellen)

□ 1. Zyklus
o 2. Zyklus

Längenänderung

Kraft

$S_1(t)$

$S_1(t_1{=}25\ ms) = 50{,}5\ mm$

$S_1(t_2{=}50\ ms) = 50{,}0\ mm$

Zeit [ms]     Fig. 11a

$S_6(t)$

$S_6(t_{1+6}{=}26{,}25\ ms) = 30{,}2991\ mm$

$S_6(t_{2+6}{=}51{,}25\ ms) = 29{,}9765\ mm$

Zeit [ms]     Fig. 11b

$\sigma(t)$

max. Spannung, hier 9° phasenverschoben zu max. Dehnung

Zeit [ms]     Fig. 11c

Fig. 12

Fig. 13a

Fig. 13b

Fig. 13c

Fig. 14

EP 0 862 053 A2

Fig 15

EP 0 862 053 A2

# Fig.16